# EUROPEAN PATENT SPECIFICATION

(11) **EP 2 149 773 B1**
(45) Date of publication and mention of the grant of the patent: **09.03.2011**
(21) Application number: 09166418.5
(22) Date of filing: 27.07.2009
(51) Int. Cl.: G01B 5/00, G01B 5/20, G01B 5/28, B23Q 1/54

(54) **Elevation inclination adjuster**
Höhen- und Neigungseinstellvorrichtung
Ajusteur d'inclinaison et d'élévation

(30) Priority: 28.07.2008 JP 2008193885
(43) Date of publication of application: 03.02.2010
(73) Proprietor: Mitutoyo Corporation, Kawasaki-shi Kanagawa 213-8533 (JP)
(72) Inventor: Hama, Nobuyuki, Kure-shi Hiroshima 737-0112 (JP)
(74) Representative: Grünecker, Kinkeldey, Stockmair & Schwanhäusser Anwaltssozietät

(56) References cited:
- US-A- 4 888 984
- US-A- 5 253 429
- US-A1- 2003 217 592
- US-B1- 6 745 616

## Description

### BACKGROUND OF THE INVENTION

### 1. FIELD OF THE INVENTION

The present invention relates to an elevation inclination adjuster for use in surface texture measuring instruments for conducting form measurements such as roughness measurements and contour measurements.

### 2. DESCRIPTION OF RELATED ART

To date, surface texture measuring instruments for conducting roughness measurements on workpieces having, for instance, cylindrical and conical edge lines are known (see, for instance, document 1: JP-A-8-29153).

The surface texture measuring instrument disclosed in Document 1, which includes a driving mechanism for moving the workpiece relatively with respect to a detector, conducts a provisional measurement before conducting a main measurement and totally automatically corrects a posture of the workpiece mounted on a table to the standard posture (i.e., a posture with which the main measurement is conducted) so as to conduct positioning of the workpiece. With the instrument, a measurement can be conducted in a short time. The positioning of the workpiece exemplarily includes adjustment (auto-setting) of an elevation position of the detector in the Z-axis direction (direction orthogonal to the measurement direction of the detector) and adjustment (auto-leveling) of an inclination angle of the workpiece for the measurement direction of the detector to be parallel to a measurement target surface of the workpiece.

However, in order for the surface texture measuring instrument disclosed in Document 1 to totally automatically conduct the positioning of the workpiece, the surface texture measuring instrument is required to use a combination of a table inclination device for inclining the table and an electric column device for moving the detector in Z-axis direction, which tends to result in a large-scale system configuration of the surface texture measuring instrument. Accordingly, a wider installation space may be required or device cost may be increased.

On the other hand, for conducing a roughness measurement on a relatively small workpiece, small-size portable surface texture measuring instruments have also been known. Such a small-size surface texture measuring instrument includes: a driving unit for measuring the workpiece by moving a detector along the surface of the workpiece; and an electric unit for controlling the driving unit and processing detection signals from the detector. Such a small-size surface texture measuring instrument typically conducts leveling of the workpiece manually. Manual leveling tends to consume longer time for adjustment, and repeatability in measurements of the same point may be deteriorated. Further, when both ends of a doughnut-shaped workpiece are measured, manual leveling may result in a damage to a stylus on the distal end of the detector if the stylus falls into the opening of the doughnut shape at the time of movement to the second measurement position. Thus, measurement of plurality of positions has not been necessarily easy. Accordingly, there has been an increasing demand for small-size surface texture instruments capable of automatically conducting a positioning.

An elevation inclination adjuster for use in a surface texture measuring instrument is known from the document US 2003/0217592 A1. The adjuster comprises a base and a table with a placement surface. The table can be elevated and inclined with respect to the base by two moving units which support the table on two points of action. The moving units can be driven independently of each other by a respective motor.

Another inclination adjuster is disclosed in US 6 745 616 B1 (Fig. 15). The table can be pivoted with respect to the base by manually adjusting two micrometer screws which support the table on two points of action. A fulcrum is arranged between the two points of action.

### SUMMARY OF THE INVENTION

An object of the invention is to provide an elevation inclination adjuster that is: usable in a surface texture measuring instrument for positioning a workpiece; capable of realizing an adjustment (auto-setting) of relative positions of a detector and the workpiece and an adjustment (auto-leveling) of an inclination angle of the detector or the workpiece so that a measurement direction of the detector becomes parallel to a measurement target surface of the workpiece with a compact configuration; and capable of enhancing operability of adjustments having been hitherto manually conducted.

An elevation inclination adjuster according to the invention comprises:
a base ; a table having a placement surface, points of action provided at two positions along a direction parallel to the placement surface and a fulcrum between the two positions, the table being provided such that a distance between the table and the base is changeable; a pair of moving units provided on the base and supporting the points of action, the moving units moving the points of action in a distance increasing-or-decreasing direction in which a distance between the points of action and the base is increased or decreased; a driving source that drives the pair of moving units and a fulcrum guide that supports the fulcrum and linearly guides the fulcrum along a direction for the placement surface to be parallely moved; wherein when the pair of moving units move the points of action by the same movement amount in the same direction, the placement surface is parallely moved, so that an elevation position of a placed object mounted on the placement surface is adjusted, and when the pair of moving units move either one of the points of action, the placement surface is swung around a fulcrum, so that an inclination angle of the placed object mounted on the placement surface is adjusted.

By moving the points of action so that a relative displacement amount of the points of action in the distance increasing-or-decreasing direction becomes zero, or by moving the points of action so that a relative displacement amount arises therebetween, the pair of moving units are capable of adjusting the elevation position and inclination angle of the placement surface.

According to the aspect to the invention, by driving either one of the pair of moving units or both thereof, both the elevation position and the inclination angle of the placed object can be adjusted with a compact configuration. Thus, the elevation inclination adjuster is usable in the positioning of the workpiece in the surface texture measuring instrument.

Specifically, for instance, by using the elevation inclination adjuster according to the aspect of the invention when a detector is moved in a measurement direction and measures the surface texture of the workpiece while the workpiece or a measuring device including the detector is placed on the placement surface, the adjustment (auto-setting) of the relative position of the detector and the workpiece and the adjustment (auto-leveling) of the inclination angle of the detector or the workpiece so that the measurement direction of the detector becomes parallel to the measurement target surface of the workpiece can be performed with a compact configuration.

Further, since the driving source drives the pair of moving units, it is possible to enhance operability of adjustments that have been hitherto manually conducted.

In the elevation inclination adjuster according to the aspect of the invention the fulcrum guide preferably includes: a guide provided on the base; and an arm linearly guided by the guide along the parallel movement direction of the placement surface and pivotally supported at the fulcrum of the table.

Alternatively, in the elevation inclination adjuster according to the aspect of the invention the fulcrum guide preferably includes: a linkage member provided swingably around the fulcrum of the table; and a pantograph mechanism provided on the base and linearly guiding the linkage member along the parallel movement direction of the placement surface.

According to the above aspect of the invention, since the fulcrum guide provided by the guide and the arm linearly guided by the guide or by the pantograph mechanism can linearly guide the fulcrum along the parallel movement direction of the placement surface, the fulcrum is prevented from moving in another direction. Thus, the accuracy in adjusting the inclination angle of the table based on the fulcrum can be enhanced.

In addition, the use of the pantograph mechanism can contribute to weight reduction of the fulcrum guide.

Preferably in the elevation inclination adjuster according to the aspect of the invention, the moving units each includes: a slider having a slant surface ; and a slider moving member connected to the driving source and moving the slider in a direction orthogonal to the parallel movement direction of the placement surface , and the table is provided with a point-of-action member that is in contact with the slant surface , so that the slant surface and a contact portion of the point-of-action member provide the points of action , a movement of the slider moving the contact portion along the slant surface.

In the above configuration, the contact portion between the slant surface and the point-of-action member, which provides the points of action, is moved along the slant surface of the slider to be moved in the direction in which the distance between the points of action and the base is increased or decreased.

With this configuration, it is only required that the slider be moved in a direction orthogonal to the parallel movement direction of the placement surface. For instance, when the parallel movement direction of the placement surface coincides with the vertical direction, the slider is only required to be horizontally moved. Accordingly, compared with a configuration where the slider is vertically moved, the heightwise dimension of the moving units can be reduced.

Preferably in the elevation inclination adjuster according to the aspect of the invention, the moving units each include: a slider having an opposed surface opposed to the table; and a slider moving member connected to the driving source and moving the slider in the parallel movement direction of the placement surface, the table is provided with a point-of-action member that is in contact with the opposed surface, so that the opposed surface and a contact portion of the point-of-action member provide the points of action , when the placement surface is parallely moved, the contact portion is moved in the distance increasing-or-decreasing direction without moving along the opposed surface, and when the placement surface is swung around the fulcrum, the contact portion is moved in the distance increasing-or-decreasing direction while moving along the opposed surface.

According to the aspect of the invention, since the opposed surface is opposed to the table, a load of a placed object placed on the placement surface is applied in a direction substantially orthogonal to the opposed surface via the point-of-action member. Thus, the support of the table by the moving units can be stabilized.

Preferably in the elevation inclination adjuster according to the aspect of the invention, the point-of-action member is a roller rotatably supported on the table.

According to the aspect of the invention, since the point-of-action member is the roller and the roller rolls on the slant surface or the opposed surface when the roller is moved, wear of the contact portion between the roller and the slant surface or the opposed surface can be minimized.

In an example (not covered by the claims), the fulcrum coincides with either one of the two points of action , one of the pair of moving units supports the fulcrum and serves as a fulcrum moving unit that moves the fulcrum in a distance increasing-or-decreasing direction in which a distance between the fulcrum and the base is increased or decreased, and the other one of the pair of moving units supports the points of action and serves as a point-of-action moving unit that moves the points of action in the distance increasing-or-decreasing direction in which the distance between the points of action and the base is increased or decreased.

Since the fulcrum coincides with either one of the two points of action, the fulcrum guide is not required, thereby contributing to reduction in the number of components.

Preferably in this example, the fulcrum moving units includes: a fulcrum slider that pivotally supports the fulcrum of the table ; and a fulcrum-slider moving member connected to the driving source and moving the fulcrum slider in the parallel movement direction of the placement surface , the point-of-action moving units includes: a point-of-action slider having an opposed surface opposed to the table ; and a point-of-action-slider moving member connected to the driving source and moving the point-of-action slider in the parallel movement direction of the placement surface , the table is provided with a point-of-action member that is in contact with the opposed surface , so that the opposed surface and a contact portion of the point-of-action member provide the points of action , when the placement surface is parallely moved, the contact portion is moved in the distance increasing-or-decreasing direction without moving along the opposed surface , and when the placement surface is swung around the fulcrum, the contact portion is moved in the distance increasing-or-decreasing direction while moving along the opposed surface.

Since the opposed surface is opposed to the table, a load of a placed object placed on the placement surface is applied in a direction substantially orthogonal to the opposed surface via the point-of-action member. Thus, the support of the table by the point-of-action member can be stabilized.

### BRIEF DESCRIPTION OF THE DRAWINGS

Fig. 1 shows the entire structure of a surface texture measuring instrument according to a first exemplary embodiment of the invention.
Fig. 2 is a block diagram for explaining a structure of a controller for the surface texture measuring instrument.
Fig. 3 is a flow diagram for explaining measuring steps of the surface texture measuring instrument.
Fig. 4 is a lateral view schematically showing a driving mechanism for an elevation inclination adjuster of the surface texture measuring instrument.
Fig. 5 is a lateral view for explaining elevation-position adjustment of the elevation inclination adjuster.
Fig. 6 is a lateral view for explaining inclination-angle adjustment of the elevation inclination adjuster.
Fig. 7 is a lateral view schematically showing a driving mechanism for an elevation inclination adjuster according to a second exemplary embodiment of the invention.
Fig. 8 is a lateral view partially showing a fulcrum guide of the elevation inclination adjuster.
Fig. 9 is a plan view showing the elevation inclination adjuster.
Fig. 10 is a lateral view schematically showing a driving mechanism for an elevation inclination adjuster according to an example which is not covered by the claims.

### DETAILED DESCRIPTION OF PREFERRED EMBODIMENT(S)

Exemplary embodiments of the invention and an example (not covered by the claims) will be described below with reference to the attached drawings.

In the description of a second exemplary embodiment and thereafter below, the same components and components for the same functions as in the below-described first exemplary embodiment will be denoted by the same numerals, and the description therefor will be simplified or omitted.

### First Exemplary Embodiment

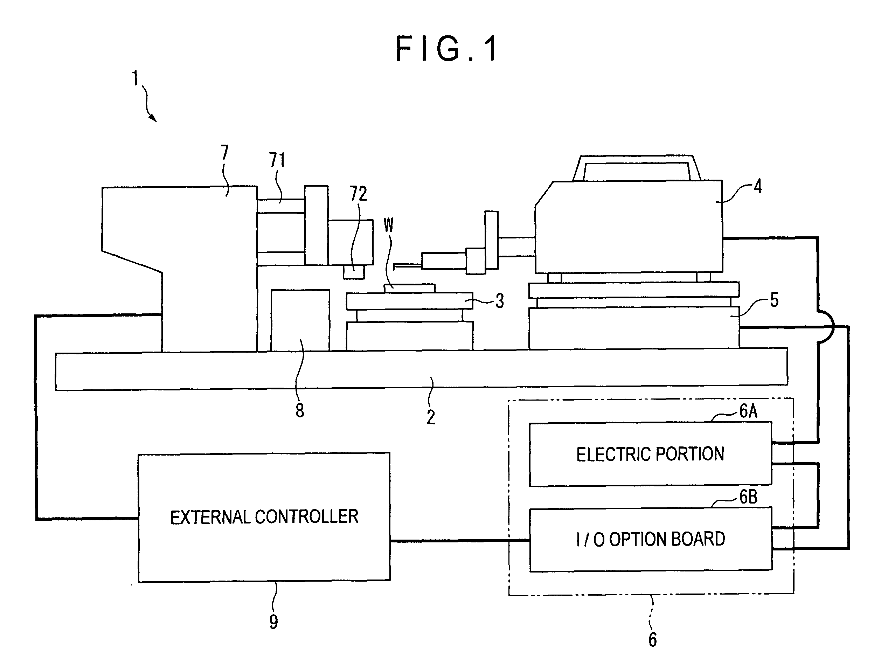

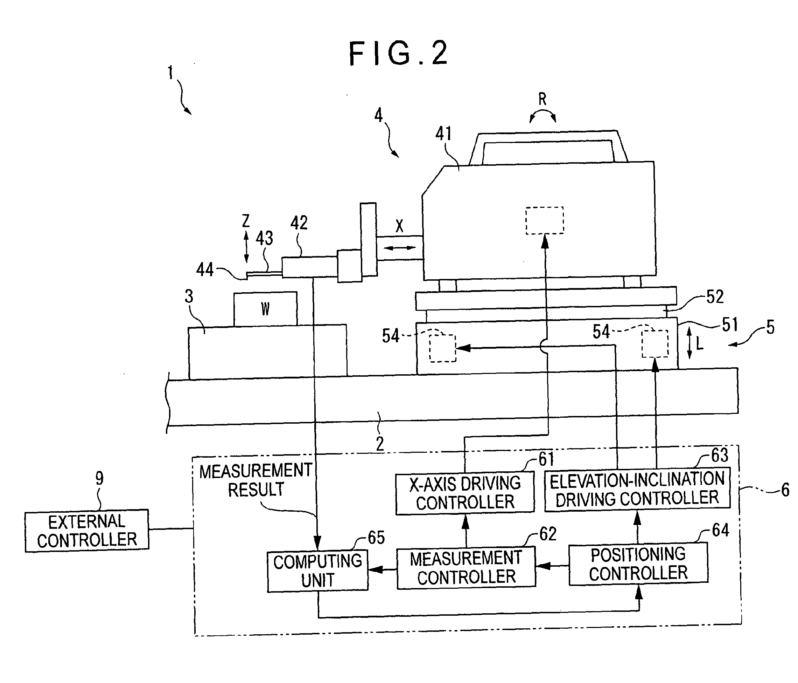

Fig. 1 shows the entire structure of a surface texture measuring instrument 1 according to the first exemplary embodiment. Fig. 2 is a block diagram for explaining a structure of a controller for the surface texture measuring instrument 1.

In Fig. 1, the surface texture measuring instrument 1, which is for conducting form measurements on a workpiece W such as roughness measurements and contour measurements, includes: a platform 2; a stage 3 on which the workpiece W is placed; a measuring device 4; an elevation inclination adjuster 5 (auto-setting/auto-leveling table) on which the measuring device 4 is placed; and a controller 6 for automatically conducting a positioning of the measuring device 4 relative to the workpiece W. The measuring device 4 is movable by the elevation inclination adjuster 5.

In addition to the stage 3 and the elevation inclination adjuster 5, a workpiece feeder 7 (external device worked in conjunction with the measuring device 4) and a parts box 8 are placed on the platform 2. An external controller 9 for controlling the workpiece feeder 7 is provided by PLC and a control box, and connected with the controller 6.

The workpiece feeder 7 includes an arm 71 extendable between the stage 3 and the parts box 8. A head 72 attached on the distal end of the arm 71 is capable of placing a workpiece W accommodated in the parts box 8 onto the stage 3.

The controller 6 is fed with measurement start/stop signals from the external controller 9 while the external controller 9 is fed with status signals from the controller 6 such as ready signals, OK/NG signals, measurement error signals and abnormal signals of the measuring device 4.

The controller 6 includes an electric portion 6A and an I/O option board 6B (external control I/O), and the signals from the external controller 9 are transmitted to the electric portion 6A via the I/O option board 6B.

As shown in Fig. 2, the measuring device 4 includes: an X-axis movement mechanism 41 placed on the elevation inclination adjuster 5; and a detector 42 mounted on the X-axis movement mechanism 41 in a manner movable in an X-axis direction. The X-axis direction is coincident with a measurement direction of the detector 42.

The detector 42, which includes: a measurement arm 43 extended in the X-axis direction; and a stylus 44 (contact piece) mounted on the distal end of the measuring arm 43, is capable of detecting a displacement amount by which the stylus 44 is displaced in a Z-axis direction when the stylus 44 contacts the workpiece W. The Z-axis direction is a direction orthogonal to the X-axis direction (i.e., measurement direction).

As described above, the measuring device 4 moves the measurement arm 43 in the X-axis direction while maintaining the contact of the stylus 44 on the workpiece W, so that the stylus 44 is displaced in the Z-axis direction in a manner following the irregularities of the surface contour of the workpiece W. By detecting the oscillation amount of the stylus 44 at this time, the measuring device 4 is capable of measuring the contour and surface roughness of the workpiece W based on the detected oscillation amount.

The elevation inclination adjuster 5, of which detailed description will be made later, includes: a base 51 mounted on the platform 2; a table 52 movably supported on the base 51; a moving unit (not shown) for moving the table 52; and a pair of driving sources 54 for driving the moving unit. The elevation inclination adjuster 5 is for elevating the measuring device 4 mounted on the table 52 along an L-axis direction as well as for swinging the measuring device 4 around an R axis. The L-axis direction may be exemplarily the vertical direction. The R axis is an axis orthogonal to a plane within which the X axis and the Z axis related to the measuring device 4 extend. In this exemplary embodiment, to swing the measuring device 4 around the R axis means to incline the measuring device 4 to the horizontal plane.

In Fig. 2, the controller 6, which includes an X-axis driving controller 61, a measurement controller 62, an elevation-inclination driving controller 63, a positioning controller 64 and a computing unit 65, is exemplarily provided by a micro computer, a data processor and various programs built-in-these equipments.

The X-axis driving controller 61 controls the X-axis movement mechanism 41 to be driven when preliminary measurements and main measurements are conducted on the workpiece W with use of the measuring device 4. The measurement controller 62 transmits control signals to the X-axis driving controller 61. The elevation-inclination driving controller 63 controls the pair of driving sources 54 of the elevation inclination adjuster 5 to be driven when the positioning is performed with use of the elevation inclination adjuster 5. The positioning controller 64 transmits control signals to the elevation-inclination driving controller 63 and transmits positioning-completion signals to the measurement controller 62. The computing unit 65 acquires results of preliminary measurements from the detector 42 upon receipt of measurement implementation signals from the measurement controller 62, and computes an error of the posture of the workpiece W with respect to the standard posture (i.e., posture when main measurements are conducted). The computing unit 65 transmits signals corresponding to the computed results to the positioning controller 64, and acquires results of main measurements from the detector 42 for analysis processing.

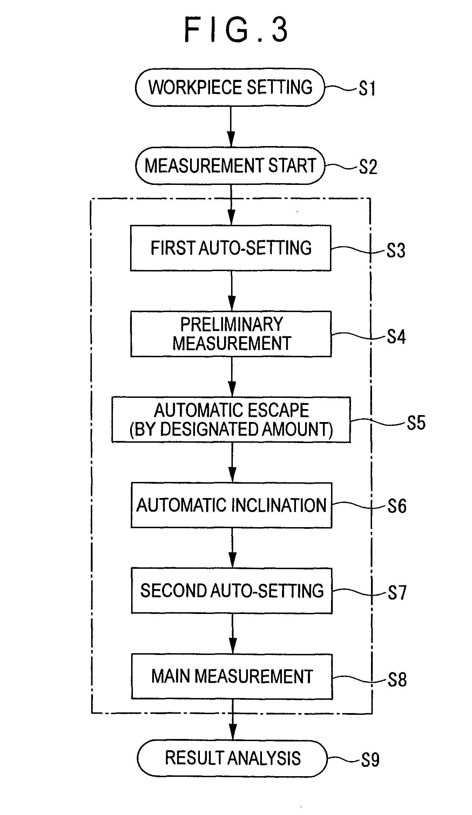

Fig. 3 is a flow diagram for explaining the steps for measuring the surface texture of the workpiece W.

First of all, the workpiece W is placed on the stage 3 (workpiece setting step: S1), and a measurement is initiated (S2).

Then, the detector 42 of the measuring device 4 is vertically moved (auto-set) to a position where the detector 42 can detect the workpiece W, and brought closer to the workpiece W (first auto-setting step: S3). In this step, by operating the elevation inclination adjuster 5 with the positioning controller 64 (Fig. 2), the measuring device 4 is lifted down. Subsequently, the measuring device 4 preliminarily measures the workpiece W (preliminary measurement step: S4). In this step, with the measurement controller 62 (Fig. 2), the detector 42 is moved in the X-axis direction to scan the surface of a measurement target portion of the workpiece W, and controlled to output the measurement result to the computing unit 65 (Fig. 2). After the preliminary measurement step S4, the-measuring device 4 is automatically escaped therefrom by a designated amount (automatic escape step: S5). In this step, the positioning controller 64 operates the elevation inclination adjuster 5 to lift up the measuring device 4 by a designated amount, in order to prevent the detector 42 from interfering with the workpiece W when the measuring device 4 is inclined in the later-described automatic inclination step S6.

Next, the computing unit 65 computes an error of the posture of the workpiece W with respect to the standard posture based on a measurement result of the preliminary measurement. For instance, based on a profile curve of the measurement target portion measured in the preliminary measurement, an inclination angle at which the surface of the measurement target portion is inclined to the measurement direction (X-axis direction) of the detector 42 is obtained. Based on a result of the computation by the computing unit 65, the positioning controller 64 operates the elevation inclination adjuster 5 to incline the measuring device 4 so that the measurement direction of the measuring device 42 becomes parallel to the surface of the measurement target portion (automatic inclination step: S6). Then, for the sake of a main measurement, the measuring device 4 is lifted down (second auto-setting step: S7) and the main measurement is conducted (main measurement step: S8). As in the preliminary measurement step S4, in the main measurement step S8, with the measurement controller 62, the detector 42 is moved in the X-axis direction to measure the surface texture of the measurement target portion of the workpiece W, and controlled to output the measurement result to the computing unit 65. The outputted measurement result is suitably analyzed (result analyzing step: S9).

In the above-described manner, after the initiation of the measurement S2, the series of operations from the first auto-setting step S3 to the main measurement step S8 can be conducted fully automatically.

As shown in Fig. 1, the surface texture measuring instrument 1 capable of the above-described fully automatic measurement includes the workpiece feeder 7 and the external controller 9, thereby providing an automatic inspection system. In other words, a user can externally control the surface texture measuring instrument 1, and easily make pass-fail decision based on the measurement result. For instance, a user can easily construct such a system that automatically performs a sorting of products (i.e., workpiece) into non-defective products and defective products and assortment thereof.

As in the above, by connecting the controller 6 with the external controller 9 via the I/O option board 6B, the surface texture measuring instrument 1 can be easily incorporated into a manufacturing line or an inspection line.

The structure of the surface texture measuring instrument 1 is not limited to such a measuring-device movable structure as shown in Fig. 1. For instance, the surface texture measuring instrument 1 may be structured such that the workpiece W is placed on the elevation inclination adjuster 5 while the measuring device 4 is placed on the stage 3. In other words, a workpiece movable structure may be adopted. In this structure, the controller 6 automatically performs a positioning of the workpiece W relative to the measuring device 4.

The elevation inclination adjuster 5, which is indispensably required for realizing the above-described surface texture measuring instrument 1, will be described in detail with reference to the drawings.

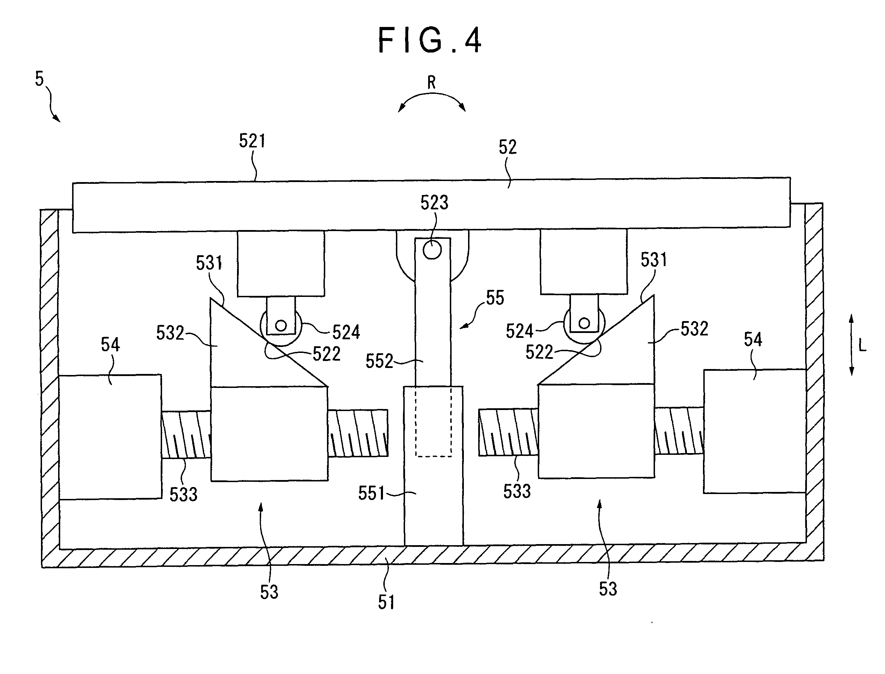

Fig. 4 is a lateral view schematically showing a driving mechanism for the elevation inclination adjuster 5.

The elevation inclination adjuster 5 includes: the base 51; the table 52 provided in such a manner that a distance between the base 51 and the table 52 is changeable; a pair of moving units 53 provided to the base 51 for supporting the table 52 while allowing the table 52 to be elevated; the driving sources 54 (motor) for driving the pair of moving units 53; and a fulcrum guide 55 provided between the pair of moving units 53.

The table 52 has: a placement surface 521; points of action 522 provided at two positions along a direction parallel to the placement surface 521; and a fulcrum 523 provided between the two points of action 522 in the direction parallel to the placement surface 521. The fulcrum 523 is provided on the center axis of the table 52.

The moving units 53, which support the points of action 522 of the table 52, are capable of moving the points of action 522 in a direction in which the distance between the points of action 522 and the base 51 is increased or decreased (i.e., distance increasing/decreasing direction).

Specifically, each moving unit 53 includes: a slider 532 having a slant surface 531; and a lead screw 533 (slider moving member) screwed to the slider 532. The lead screw 533 is provided along a direction orthogonal to a direction in which the placement surface 521 is parallely moved (parallel movement direction), and rotatably supported by the base 51. The lead screw 533 is connected to the driving source 54 and rotated by a rotation driving force of the driving source 54 so as to move the slider 532 in the direction orthogonal to the parallel movement direction of the placement surface 521.

The table 52 also rotatably supports rollers 524 (point-of-action members) that are in contact with the slant surfaces 531. The slant surfaces 531 and contact portions of the rollers 524 provide the points of action 522, so that the points of action 522 are moved along the slant surfaces 531 when the sliders 532 are moved.

As described above, the pair of moving units 53 are designed to move the points of action 522, which are provided at two positions with the center axis of the table 52 interposed therebetween, in the vertical direction by motor driving.

While this exemplary embodiment uses the rollers 524 rotatably supported on the table 52 as the point-of-action members, the point-of-action members may be any members other than rollers, as long as such members are capable of rolling or sliding on the slant surfaces.

The fulcrum guide 55 includes: a guide 551 provided to the base 51; an arm 552 linearly guided by the guide 551 along the parallel movement direction of the placement surface 521, i.e., in the L-axis direction (in this exemplary embodiment, vertical direction). The upper end of the arm 552 is supported on the fulcrum 523 of the table 52.

The fulcrum guide 55 linearly guides the fulcrum 523 (inclination rotation center) along the L-axis direction and the fulcrum 523 does not move in the horizontal direction. Thus, the accuracy when the inclination angle of the table 52 is adjusted based on the fulcrum 523 is increased. The elevation position of the table 52 needs to be determined by the support positions of the rollers 524 provided at the two positions. Thus, the movement of the fulcrum 523 in the elevation direction cannot be restrained. However, with use of the fulcrum guide 55 of this exemplary embodiment, the fulcrum 523 can be linearly guided without restraining the movement of the fulcrum 523 in the elevation direction.

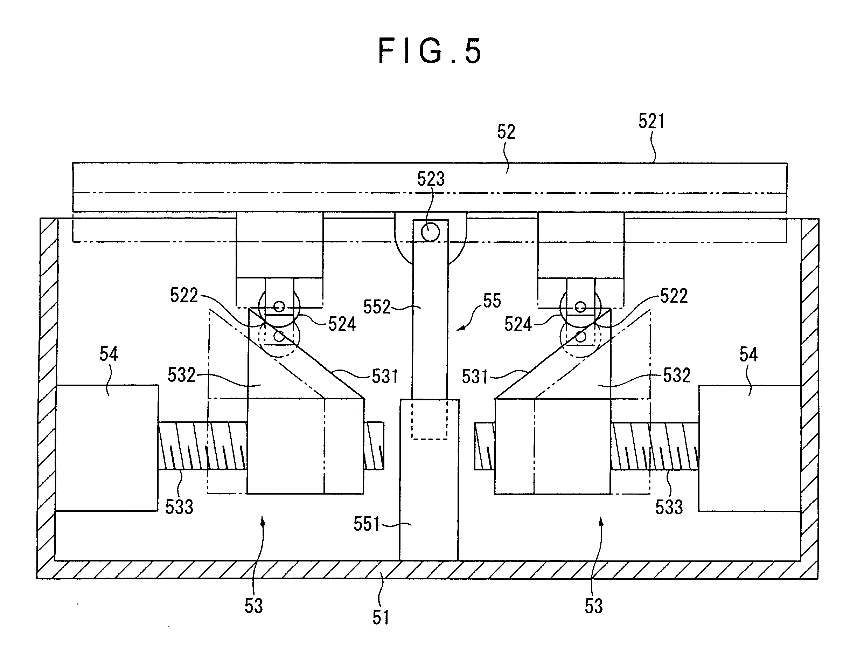

According to such a configuration, as shown in Fig. 5, when the pair of moving units 53 move the points of action 522 in the same direction by the same amount, the placement surface 521 is parallely moved, so that the elevation position of the non-illustrated measuring device placed on the placement surface 521 (placed object) can be adjusted. In other words, the table 52 can be vertically moved (auto-set) along the L-axis direction orthogonal to the horizontal plane. Herein, "auto-set" means a function for adjusting the relative positions of the detector 42 and the workpiece W.

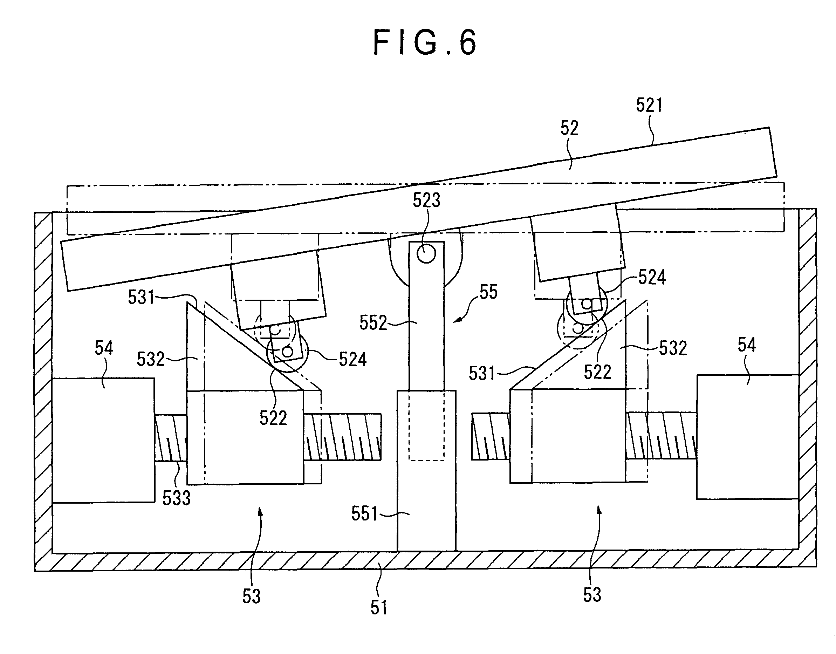

Further, as shown in Fig. 6, when the pair of moving units 53 move either one of the points of action 522, the placement surface 521 is swung around the fulcrum 523, so that the inclination angle of the measuring device placed on the placement surface 521 is adjusted. In other words, the table 52 can be moved to be inclined (auto-leveling) around the R axis orthogonal to the L axis and parallel to the horizontal plane. Herein, "auto-leveling" means a function for adjusting an inclination angle of the detector 42 or the workpiece W so that the measurement direction of the detector 42 becomes parallel to the measurement target surface of the workpiece W.

In the automatic inclination step S6 in the flow shown in Fig. 3, after the computing unit obtains the inclination angle at which the surface of the measurement target portion is inclined to the measurement direction of the detector 42 (Fig. 2), the computing unit may obtain the relative height of the points of action 522 at two positions corresponding to the obtained inclination angle, and output to-be-adjusted movement amounts of the moving units 53 to the positioning controller 64 (Fig. 2) as a control signal. In the above manner, the positioning controller 64 can incline the table 52 by moving the moving units 53 by the respective predetermined amounts, and can control the measurement direction of the detector 42 to be parallel to the surface of the measurement target portion.

### Advantages of the First Exemplary Embodiment

This exemplary embodiment provides the following exemplary advantages.
(1) By driving either one of the pair of moving units 53 or both thereof, both the elevation position and the inclination angle of the measuring device 4 can be adjusted with a compact configuration. Thus, the positioning of the workpiece W in the surface texture measuring instrument 1 can be performed.
(2) Since the driving sources 54 drive the pair of moving units 53, it is possible to enhance operability of adjustments that have been hitherto manually conducted.
(3) The fulcrum guide 55 linearly guides the fulcrum 523 (inclination rotation center) along the L-axis direction and the fulcrum 523 does not move in the horizontal direction. Thus, the accuracy when the inclination angle of the table 52 is adjusted based on the fulcrum 523 can be increased.
(4) Since the sliders 532 are only required to be horizontally moved, the entire device can be downsized in terms of height dimension as compared with a configuration where the sliders 532 are vertically moved.
(5) Since the point-of-action member is the roller 524 and the roller 524 rolls on the slant surface 531 when the roller 524 is moved, wear of a contact portion between the roller 524 and the slant surface 531 can be minimized.

### Second Exemplary Embodiment

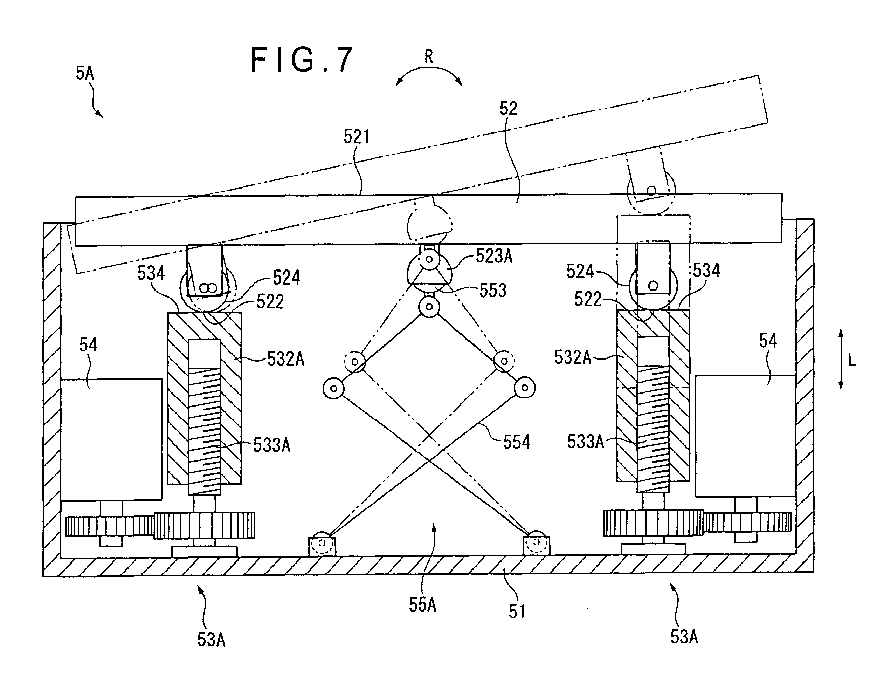

Next, an elevation inclination adjuster 5A according to a second exemplary embodiment of the invention will be described with reference to Fig. 7.

Fig. 7 is a lateral view schematically showing a driving mechanism for the elevation inclination adjuster 5A. The elevation inclination adjuster 5A is different from the above elevation inclination adjuster 5 according to the first exemplary embodiment in configurations of moving units 53A and fulcrum 55A. The other structures are substantially the same.

Specifically, the moving units 53A each include: a slider 532A having a horizontal opposed surface 534 opposed to the table 52; and a lead screw 533A (slider moving member) connected to the driving source 54 for moving the slider 532A in the L-axis direction.

More specifically, the driving source 54 and the lead screw 533A are supported on the base 51 such that their rotation axes vertically extend. The rotation driving force of the driving source 54 is transmitted to the lead screw 533A via gears. The slider 532A screwed to the lead screw 533A is moved in the L-axis direction by the rotation of the lead screw 533A.

Further, the table 52 is provided with the rollers 524 (point-of-action member) that are in contact with the opposed surfaces 534. The opposed surfaces 534 and contact portions of the rollers 524 provide the points of action 522.

The fulcrum guide 55A includes: a linkage member 553 provided to be swingable around the fulcrum 523A of the table 52; and a pantograph mechanism 554 provided to the base 51 for linearly guiding the linkage member 553 along the L-axis direction. With use of the fulcrum guide 55A, the fulcrum 523A can be linearly guided in the L-axis direction without restraining the movement of the fulcrum 523A in the elevation direction.

According to such a configuration, when the placement surface 521 is parallely moved, the points of action 522 are moved in the L-axis direction without moving along the opposed surface 534.

In addition, when the placement surface 521 is swung around the fulcrum 523A, the points of action 522 are moved in the L-axis direction while moving along the opposed surface 534.

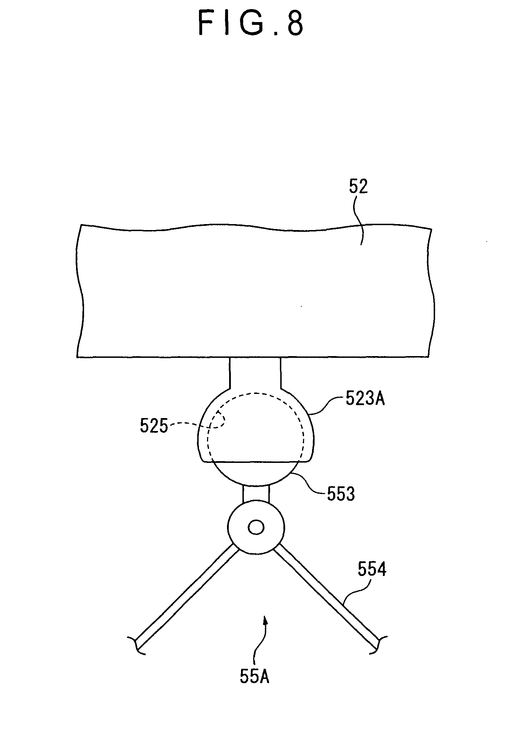

A linkage structure of the fulcrum 523A and the linkage member 553 will be described below with reference to Fig. 8.

The fulcrum 523A, which is provided on a lower surface of the table 52, internally includes a substantially spherical accommodating portion 525. The substantially spherical accommodating portion 525 is downwardly open. The center position of the substantially spherical accommodating portion 525 serves substantially as a fulcrum.

The linkage member 553 includes a spherical portion accommodated in the substantially spherical accommodating portion 525 of the fulcrum 523A, and jointed thereto to be rotatable around its shaft in two directions relative to the fulcrum 523A.

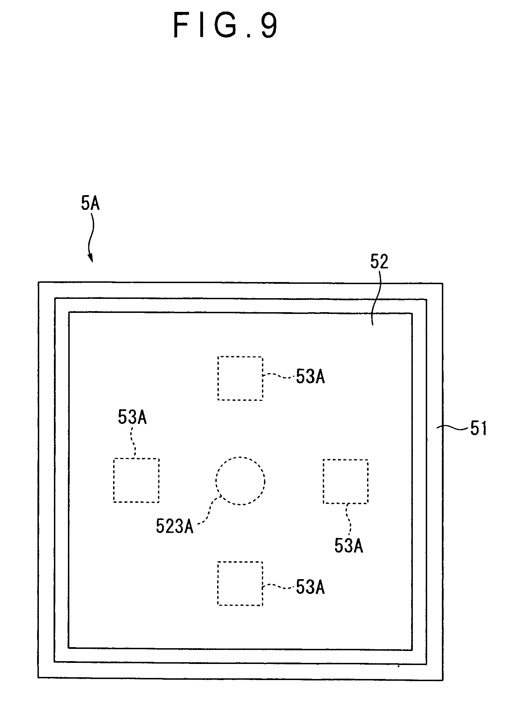

As shown in Fig. 9, the elevation inclination adjuster 5A with such a linkage structure includes four moving units 53A of which one pair are arranged in one direction while the other pair are arranged in a direction orthogonal thereto in plan view. With this configuration, the table 52 can be inclined around the fulcrum 523A in two directions. Further, by combining a Y-axis table for moving the workpiece W in the Y-axis direction, auto-leveling of the measurement target surface, which is required for a three-dimensional surface roughness measurement, can be conducted.

This exemplary embodiment can provide the following exemplary advantage in addition to substantially the same advantages as the above-described ones.
(6) The fulcrum guide 55A linearly guides the fulcrum 523A along the L-axis direction and the fulcrum 523 does not move in the horizontal direction. Thus, the accuracy when the inclination angle of the table 52 is adjusted based on the fulcrum 523 can be increased. In addition, the use of the pantograph mechanism 554 can contribute to weight reduction of the fulcrum guide 55A.
(7) Since the opposed surface 534 is substantially horizontally provided to be orthogonal to the L axis, a load of the measuring device (not shown) to be placed on the placement surface 521 is applied in a direction orthogonal to the opposed surface 534 via the rollers 524. Thus, the support of the table 2 by the moving units 53A can be stabilized.
(8) Since the point-of-action member is the roller 524 and the roller 524 rolls on the opposed surface 534 when the roller 524 is moved, wear of a contact portion between the roller 524 and the opposed surface 534 can be minimized.

### Example (not covered by the claims)

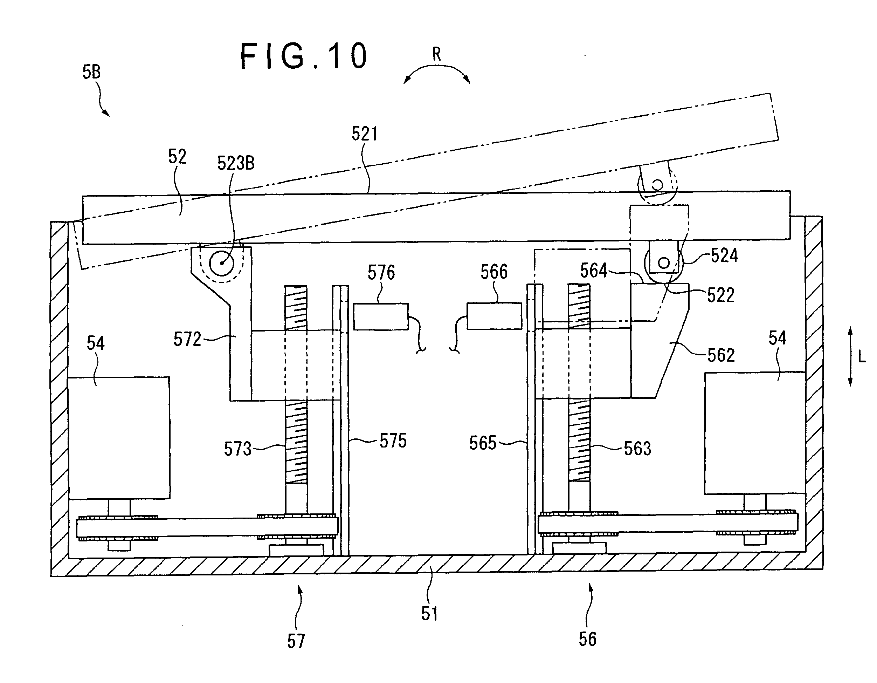

Next, an elevation inclination adjuster 5B according to an example (not covered by the claims) will be described with reference to Fig. 10.

Fig. 10 is a lateral view schematically showing a driving mechanism for the elevation inclination adjuster 5B. The elevation inclination adjuster 5B is different from the elevation inclination adjusters of the above exemplary embodiments in that the fulcrum 523B coincides with either one of the points of action at two positions. The other structures are substantially the same.

Either one of the pair of moving units 56, 57 supports the point of action 522, and also serves as a point-of-action moving unit 56 for moving the point of action 522 in a direction in which the distance between the point of action 522 and the base 51 is increased or decreased (i.e., distance increasing/decreasing direction).

On the other hand, the other one of the pair of moving units 56, 57 supports the fulcrum 523B, and also serves as a fulcrum moving unit 57 for moving the fulcrum 523B in a direction in which the distance between the fulcrum 523B and the base 51 is increased or decreased (i.e., distance increasing/decreasing direction).

Specifically, the point-of-action moving unit 56 include: a point-of-action slider 562 having an opposed surface 564 opposed to the table 52; a lead screw 563 (point-of-action-slider moving member) connected to the driving source 54 for moving the point-of-action slider 562 in the L-axis direction of the placement surface 521; and a linear-movement guide 565 for linearly guiding the point-of-action slider 562.

On the other hand, the fulcrum moving unit 57 include: a fulcrum slider 572 for pivotally supporting the fulcrum 523B of the table 52 by a bearing; a lead screw 573 (fulcrum-slider moving member) connected to the driving source 54 for moving the fulcrum slider 572 in the L-axis direction; and a linear-movement guide 575 for linearly guiding the fulcrum slider 572.

Further, the table 52 is provided with the roller 524 (point-of-action member) that is in contact with the opposed surface 564. The opposed surface 564 and contact portion of the roller 524 provide the point of action 522. The roller 524, which rolls on the opposed surface 564, is supported in a manner movable on the opposed surface 564.

When the placement surface 521 is parallely moved, the point of action 522 is moved in the distance increasing/decreasing direction without moving along the opposed surface 522.

In addition, when the placement surface 521 is swung around the fulcrum 523B, the point of action 522 is moved in the distance increasing/decreasing direction while moving along the opposed surface 564.

The driving sources 54, which are DC servomotors with encoders, are capable of detecting relative positions of the sliders 562 and 572. In this configuration, the current positions of the sliders 562 and 572 need to be recognized when the elevation inclination adjuster 5B is switched on. Accordingly, the linear-movement guides 565 and 575 are provided with photosensors 566 and 576 (position detector) for detecting the original positions of the sliders 562 and 572. When the sliders 562 and 572 are moved to the original positions, the photosensors 566 and 576 detect the sliders 562 and 572.

When the linear-movement guides 565 and 575 are provided with linear encoders capable of detecting absolute positions of the sliders 562 and 572, the above-described detection of the original positions can be skipped.

In this example (not covered by the claims), the rotation driving force of the driving sources is transmitted to the lead screws by timing belts. However, the transmission mechanism is not limited to a belt-driven mechanism but may be a mechanism driven by worms and worm wheels. For instance, the driving sources may be located so that their rotation shafts horizontally extend, and the driving sources may rotate the worms to transmit the rotation force to the worm wheels provided at lower ends of the lead screws. With this arrangement, the rotation shafts of the driving sources can be horizontally located, thereby reducing the height of the entire device.

This example (not covered by the claims) can provide the following exemplary advantage in addition to substantially the same advantages as the above-described ones.
(9) Since the fulcrum 523B coincides with either one of the points of action at two positions, the fulcrum guide is not required, thereby contributing to reduction in the number of components.

It should be understood that the invention is not limited to the above-described first and second exemplary embodiments but includes modifications and improvements as long as such modifications and improvements are within the scope of the invention as defined by the appended claims.

## Claims

1. An elevation inclination adjuster, comprising:
a base (51);
a table (52) having a placement surface (521), points of action (522) provided at two positions along a direction parallel to the placement surface (521) and a fulcrum (523, 523A) between the two positions, the table (52) being provided such that a distance between the table (52) and the base (51) is changeable;
a pair of moving units (53, 53A) provided on the base (51) and supporting the points of action (522), the moving units moving the points of action (522) in a distance increasing-or-decreasing direction in which a distance between the points of action (522) and the base (51) is increased or decreased;
a driving source (54) that drives the pair of moving units (53, 53A), and
a fulcrum guide (55, 55A) that supports the fulcrum and linearly guides the fulcrum along a direction for the placement surface (521) to be parallely moved;
wherein
when the pair of moving units (53,53A) move the points of action (522) by the same movement amount in the same direction, the placement surface (521) is parallely moved, so that an elevation position of a placed object (4) mounted on the placement surface (521) is adjusted, and
when the pair of moving units (53,53A) move either one of the points of 20 action (522), the placement surface (521) is swung around a fulcrum (523,523A), so that an inclination angle of the placed object (4) mounted on the placement surface (521) is adjusted.

2. The elevation inclination adjuster according to claim 1, wherein the fulcrum guide (55) comprises:
a guide (551) provided on the base (51); and
an arm (552) linearly guided by the guide (551) along the parallel movement direction of the placement surface (521) and pivotally supported at the fulcrum (523) of the table (52).

3. The elevation inclination adjuster according to claim 1, wherein the fulcrum guide (55A) comprises:
a linkage member (553) provided swingably around the fulcrum (523A) of the table (52); and
a pantograph mechanism (554) provided on the base (51) and linearly guiding the linkage member (553) along the parallel movement direction of the placement surface (521).

4. The elevation inclination adjuster according to any one of claims 1 to 3, wherein the moving units (53) each comprises:
a slider (532) having a slant surface (531); and
a slider moving member (533) connected to the driving source (54) and moving the slider (532) in a direction orthogonal to the parallel movement direction of the placement surface (521), and
the table (52) is provided with a point-of-action member (524) that is in contact with the slant surface (531), so that the slant surface (531) and a contact portion of the point-of-action member (524) provide the points of action (522), a movement of the slider (532) moving the contact portion along the slant surface (531).

5. The elevation inclination adjuster according to any one of claims 1 to 3, wherein the moving units (53A) each comprise:
a slider (532A) having an opposed surface (534) opposed to the table (52); and
a slider moving member (533A) connected to the driving source (54) and moving the slider (532A) in the parallel movement direction of the placement surface (521), the table (52) is provided with a point-of-action member (524) that is in contact with the opposed surface (534), so that the opposed surface (534) and a contact portion of the point-of-action member (524) provide the points of action (522),
when the placement surface (521) is parallely moved, the contact portion is moved in the distance increasing-or-decreasing direction without moving along the opposed surface (534), and
when the placement surface (521) is swung around the fulcrum (523A), the contact portion is moved in the distance increasing-or-decreasing direction while moving along the opposed surface (534).

6. The elevation inclination adjuster according to claim 4 or 5, wherein the point-of-action member (524) is a roller rotatably supported on the table (52).

## Patentansprüche

1. Höhen- und Neigungseinstelleinrichtung umfassend:
eine Basis (51);
einen Tisch (52) mit einer Stellfläche (521), Angriffspunkten (522), die an zwei Positionen in einer Richtung parallel zu der Stellfläche (521) vorgesehen sind, und einen Gelenkpunkt (523, 523A) zwischen den zwei Positionen, wobei der Tisch (52) derart angeordnet ist, dass ein Abstand zwischen dem Tisch (52) und der Basis (51) veränderbar ist;
ein Bewegungselementpaar (53, 53A), das an der Basis (51) angeordnet ist und die Angriffspunkte (522) hält, wobei die Bewegungselemente die Angriffspunkte (522) in eine Richtung mit größer oder kleiner werdendem Abstand bewegen, um einen Abstand zwischen den Angriffspunkten (522) und der Basis (51) zu vergrößern oder zu verkleinern;
eine Antriebsquelle (54), die das Bewegungselementpaar (53, 53A) antreibt, und
eine Gelenkpunktführung (55, 55A), die den Gelenkpunkt (523, 523A) hält und linear in eine Richtung führt, um die Stellfläche (521) parallel zu bewegen;
wobei, wenn das Bewegungselementpaar (53, 53A) die Angriffspunkte (522) um die gleiche Strecke in die gleiche Richtung verschiebt, die Stellfläche (521) parallel bewegbar ist, so dass eine Höhenposition eines platzierten Objekts (4), das auf der Stellfläche (521) befestigt ist, einstellbar ist, und
wobei, wenn das Bewegungselementpaar (53, 53A) einen der Angriffspunkte (522) bewegt, die Stellfläche (521) um dem Gelenkpunkt (523, 523A) schwenkbar ist, so dass ein Neigungswinkel des platzierten Objekts (4), das auf der Stellfläche (521) befestigt ist, einstellbar ist.

2. Höhen- und Neigungseinstelleinrichtung nach Anspruch 1, wobei die Gelenkpunktführung (55) umfasst:
eine an der Basis (51) vorgesehene Führung (551); und
einen Arm (552), der durch die Führung (551) linear in die parallele Bewegungsrichtung der Stellfläche (521) führbar ist und schwenkbar an dem Gelenkpunkt (523) des Tisches (52) gehalten wird.

3. Höhen- und Neigungseinstelleinrichtung nach Anspruch 1, wobei die Gelenkpunktführung (55A) umfasst:
ein Kopplungselement (553), das schwenkbar um den Gelenkpunkt (523A) des Tisches (52) angeordnet ist; und
einen an der Basis (51) vorgesehenen Hub- und Senkantrieb (554), der das Kopplungselement (553) linear in die parallele Bewegungsrichtung der Stellfläche (521) führt.

4. Höhen- und Neigungseinstelleinrichtung nach einem der Ansprüche 1 bis 3, wobei jedes Bewegungselement (53) umfasst:
ein Gleitstück (532) mit einer schrägen Fläche (531); und
ein Gleitstückbewegungselement (533), das mit der Antriebsquelle (54) verbunden ist und das Gleitstück (532) in eine Richtung orthogonal zu der parallelen Bewegungsrichtung der Stellfläche (521) bewegt, und
wobei der Tisch (52) mit einem Angriffspunktelement (524) ausgebildet ist, das in Kontakt mit der schrägen Fläche (531) steht, so dass die schräge Fläche (531) und ein Kontaktbereich des Angriffspunktelements (524) die Angriffspunkte (522) bilden, wobei bei Bewegung des Gleitstücks (532) der Kontaktbereich entlang der schrägen Fläche (531) bewegbar ist.

5. Höhen- und Neigungseinstelleinrichtung nach einem der Ansprüche 1 bis 3, wobei jedes Bewegungselement (53A) umfasst:
ein Gleitstück (532A) mit einer Gegenfläche (534), die dem Tisch (52) gegenüberliegt; und
ein Gleitstückbewegungselement (533A), das mit der Antriebsquelle (54) verbunden ist und das Gleitstück (532A) in die parallele Bewegungsrichtung der Stellfläche (521) bewegt, wobei der Tisch (52) mit einem Angriffspunktelement (524) ausgebildet ist, das in Kontakt mit der Gegenfläche (534) steht, so dass die Gegenfläche (534) und ein Kontaktbereich des Angriffspunktelements (524) die Angriffspunkte (522) bilden, wobei
wenn die Stellfläche (521) parallel bewegt wird, der Kontaktbereich in die Richtung mit größer oder kleiner werdendem Abstand bewegbar ist ohne sich entlang der Gegenfläche (534) zu bewegen, und
wenn die Stellfläche (521) um den Gelenkpunkt (523A) geschwenkt wird, der Kontaktbereich in die Richtung mit größer oder kleiner werdendem Abstand bewegbar ist, während er sich entlang der Gegenfläche (534) bewegt.

6. Höhen- und Neigungseinstelleinrichtung nach einem der Ansprüche 4 oder 5, wobei das Angriffspunktelement (524) ein Rollenkörper ist, der drehbar auf dem Tisch (52) gehalten wird.

## Revendications

1. Ajusteur d'inclinaison et d'élévation, comprenant :
une base (51) ;
une table (52) ayant une surface de placement (521), des points d'action (522) ménagés à deux positions le long d'une direction parallèle à la surface de placement (521) et un pivot (523, 523A) entre les deux positions, la table (52) étant ménagée de sorte qu'une distance entre la table (52) et la base (51) puisse être changée ;
une paire d'unités mobiles (53, 53A) ménagées sur la base (51) et supportant les points d'action (522), les unités mobiles déplaçant les points d'action (522) sur une distance d'augmentation ou de diminution, dans laquelle une distance entre les points d'action (522) et la base (51) est augmentée ou diminuée ;
une source d'entraînement (54) qui commande la paire d'unités mobiles (53, 53A) et
un guide de pivot (55, 55A) qui supporte le pivot et guide de manière linéaire ledit pivot, le long d'une direction pour que la surface de placement (521) soit déplacée parallèlement ; dans lequel
quand la paire d'unités mobiles (53, 53A) déplace les points d'action (522) de la même ampleur de mouvement dans la même direction, la surface de placement (521) est parallèlement déplacée, de sorte qu'une position d'élévation d'un objet placé (4) monté sur la surface de placement (521) est ajustée, et
quand la paire d'unités mobiles (53, 53A) déplace l'un des points d'action (522), la surface de placement (521) est balancée autour d'un pivot (523, 523A) de sorte qu'un angle d'inclinaison de l'objet placé (4) monté sur la surface de placement (521) soit ajusté.

2. Ajusteur d'inclinaison et d'élévation, selon la revendication 1, dans lequel le guide de pivot (55) comprend :
un guide (551) ménagé sur la base (51) ; et
un bras (552) guidé linéairement par le guide (551) le long de la direction de mouvement parallèle de la surface de placement (521) et supporté de manière pivotante sur le pivot (523) de la table (52).

3. Ajusteur d'inclinaison et d'élévation selon la revendication 1, dans lequel le guide de pivot (55A) comprend :
un élément de liaison (553) ménagé en balancement autour du pivot (523A) de la table (52) ; et
un mécanisme à pantographe (554) ménagé sur la base (51) et guidant linéairement l'élément de liaison (553) le long de la direction de mouvement parallèle de la surface de placement (521).

4. Ajusteur d'inclinaison et d'élévation selon l'une quelconque des revendications 1 à 3, dans lequel les unités mobiles (53) comprennent chacune :
un patin (532) ayant une surface inclinée (531) ; et
un élément de déplacement du patin (533) relié à la source d'entraînement (54) et déplaçant le patin (532) dans une direction perpendiculaire à la direction du mouvement parallèle de la surface de placement (521) et
la table (52) est dotée d'un élément de point d'action (524) qui est en contact avec la surface inclinée (531), de sorte que la surface inclinée (531) et une partie de contact de l'élément de point d'action (524) forment les points d'action (522), un mouvement du patin (532) déplaçant la partie de contact le long de la surface inclinée (531).

5. Ajusteur d'inclinaison et d'élévation selon l'une quelconque des revendications 1 à 3, dans lequel les unités mobiles (53A) comprennent chacune :
un patin (532A) ayant une surface opposée (534) opposée à la table (52) ; et
un élément de déplacement de patin (533A) relié à la source d'entraînement (54) et déplaçant le patin (532A) dans la direction de mouvement parallèle de la surface de placement (521), la table (52) étant dotée d'un élément de point d'action (524) qui est en contact avec la surface opposée (534) ; de sorte que la surface opposée (534) et une partie de contact de l'élément de point d'action (524) forment les points d'action (522),
quand la surface de placement (521) est déplacée parallèlement, la partie de contact est déplacée sur la distance d'augmentation ou de diminution sans déplacer la surface opposée (534), et
quand la surface de placement (521) est balancée autour du pivot (523A), la partie de contact est déplacée sur la distance d'augmentation ou de diminution, tout en déplaçant la surface opposée (534).

6. Ajusteur d'inclinaison et d'élévation selon la revendication 4 ou 5, dans lequel l'élément de point d'action (524) est un rouleau supporté en rotation sur la table (52).
